# EUROPÄISCHE PATENTSCHRIFT

(11) **EP 1 771 291 B1**
(45) Veröffentlichungstag und Bekanntmachung des Hinweises auf die Patenterteilung: **18.11.2009**
(21) Anmeldenummer: 05740733.0
(22) Anmeldetag: 17.05.2005
(51) Int. Cl.: B29C 47/00, B29C 47/20, B29C 47/70

(54) **EXTRUSIONSDÜSE ZUM EXTRUDIEREN VON HOHLPROFILEN**
EXTRUSION DIE FOR EXTRUDING HOLLOW PROFILES
FILIERE D'EXTRUSION POUR L'EXTRUSION DE PROFILES CREUX

(30) Priorität: 23.07.2004 AT 12662004
(43) Veröffentlichungstag der Anmeldung: 11.04.2007
(73) Patentinhaber: Gruber & Co Group GmbH, 4643 Pettenbach (AT)
(72) Erfinder: KRUMBÖCK, Erwin, A-4052 Ansfelden (AT)
(74) Vertreter: Hübscher, Helmut
(86) Internationale Anmeldenummer: PCT/AT2005/000164
(87) Internationale Veröffentlichungsnummer: WO 2006/007606

(56) Entgegenhaltungen:
- EP-A- 0 816 047
- DE-A1- 3 725 447
- US-A- 5 252 268
- US-A- 5 282 731
- US-B1- 6 533 979

## Beschreibung

### Technisches Gebiet

Die Erfindung betrifft eine Extrusionsdüse zum Extrudieren von Hohlprofilen mit einem an ein Verteilerstück angeschlossenen, Extrusionskanäle zur Formung eines Profilstrangs bildenden Düsenkopf und mit einem zwischen dem Düsenkopf und dem Verteilerstück vorgesehenen, quer zu den Extrusionskanälen verlaufenden Verteilerraum, der entlang seines Umfanges an einen Ringkanal zur Beaufschlagung mit Kunststoffschmelze angeschlossen ist und von dem die Extrusionskanäle des Düsenkopfes ausgehen.

### Stand der Technik

Bei herkömmlichen Extrusionsdüsen (US 525 2 268 A) wird zwischen dem im allgemeinen runden Anschlußkanal und einem Düsenkopf, dessen Extrusionskanäle hinsichtlich ihrer Position und Spaltenbreite eng an die Kontur des zu extrudierenden Profils angelehnt sind, ein Einlaufbereich vorgesehen, der einen allmählichen Übergang vom Anschlußkanal zu den Extrusionskanälen des Düsenkopfes bildet, um im Bereich der Schmelzströmung Stagnationszonen, also Zonen mit niedriger Strömungsgeschwindigkeit zu vermeiden. In solchen Stagnationszonen besteht nämlich die Gefahr, daß bei thermisch instabilen Schmelzen, z.B. PVC, der Kunststoff geschädigt wird. Nachteilig bei diesen Extrusionsdüsen ist, daß sie nur für einen Profilquerschnitt eingesetzt werden können. Um diesen Nachteil zu vermeiden, ist es darüber hinaus bekannt, anstelle des Einlaufbereichs ein Verteilerstück vorzusehen, das zum Düsenkopf hin einen Verteilerraum aufweist, von dem die Extrusionskanäle des Düsenkopfes ausgehen, so daß das Verteilerstück weitgehend unabhängig von der Kontur der Extrusionskanäle ausgebildet werden kann. Zur Einspeisung der Kunststoffschmelze in den Verteilerraum ist ein Ringkanal vorgesehen, der entlang des Umfanges des Verteilerraumes in diesen mündet, so daß die Kunststoffschmelze im wesentlichen durch den Verteilerraum radial von außen nach innen zu den anschließenden Extrusionskanälen fließt. Mit Hilfe dieser bekannten Extrusionsdüsen mit einem Verteilerstück lassen sich zwar Vollprofile ohne Beschädigungsgefahr für thermisch instabile Kunststoffschmelzen herstellen, nicht aber Hohlprofile.

Außerdem ist ein Stand der Technik nach dem Oberbegriff des Anspruchs 1 aus der EP 0 816 047 A2 bekannt. Die EP 0 816 047 A2 offenbart ein Mischelement, das einen Schmelzstrom vom Extruder homogenisieren soll, bevor dieser Schmelzstrom dem Düsenkopf über einen quer zum Düsenkopf verlaufenden Verteilerkanal zugeführt wird. Zum Zwecke der Mischung wird ein Teil des Schmelzstroms von außen nach innen sowie von innen nach außen geleitet, wobei dafür am Mischelement Bohrungen vorgesehen sind. Nachteilig kann dieses Mischelement Stagnationszonen im Zwischenbereich seiner Bohrungen nicht vermeiden.

### Darstellung der Erfindung

Der Erfindung liegt somit die Aufgabe zugrunde, für das Extrudieren von Hohlprofilen eine Extrusionsdüse zu schaffen, die ohne einen den Einsatz auf einen Profilquerschnitt beschränkenden Einlaufbereich zum allmählichen Übergang vom Anschlußkanal auf die Extrusionskanäle des Düsenkopfes auskommt.

Ausgehend von einer Extrusionsdüse der eingangs geschilderten Art löst die Erfindung die gestellte Aufgabe dadurch, daß das Verteilerstück einen innerhalb des Ringkanals in den Verteilerraum derart mündenden Innenkanal zur zusätzlichen Beaufschlagung des Verteilerraums mit Kunststoffschmelze aufweist, daß die entgegengesetzten Ströme aus Kunststoffschmelze des Ringkanals und des Innenkanals zumindest im Bereich eines Extrusionskanals aufeinandertreffen und über diesen Extrusionskanal abfließen, um damit Stagnationszonen im Verteilerraum zu vermeiden.

Der Erfindung liegt die Erkenntnis zugrunde, daß im Verteilerraum des Verteilerstücks unabhängig von der Position und den Abmessungen der Extrusionskanäle nur dann eine sich über den gesamten Verteilerraum erstreckende Strömung der Kunststoffschmelze ohne Stagnationszonen aufrechterhalten werden kann, wenn der Verteilerraum durch zwei unabhängige, gegeneinander gerichtete Schmelzströme beaufschlagt wird, nämlich einen radial von außen nach innen und einen radial von innen nach außen gerichteten Schmelzstrom. Dies führt dazu, daß eine Schmelzströmung auch in Bereich von Hohlkammern entsteht, deren sie umschließende Extrusionskanäle sonst nur von außen beschickt werden können. Im Gegensatz zum Stand der Technik drängt nämlich die zusätzliche Schmelzströmung des Innenkanals die Kunststoffschmelze aus dem Hohlkammerbereich in einen den Hohlkammerbereich begrenzenden Extrusionskanal, was den Verteilerraum frei von Stagnationszonen hält. Es kann durch die erfindungsgemäßen Maßnahmen somit stets sichergestellt werden, daß die entgegengesetzten Schmelzströmungen zumindest im Bereich eines Extrusionskanals aufeinandertreffen und über diesen Extrusionskanal abfließen. In diesen Zusammenhang ist zu beachten, daß sich Ströme aus Kunststoffschmelzen nicht turbulent verhalten, so daß die aufeinandertreffenden Schmelzeströme ohne wesentliche Durchmischung über einen gemeinsamen Extrusionskanal aus dem Verteilerraum abgeleitet werden können, wobei die Trennfläche zwischen den Schmelzströmen innerhalb des Extrusionskanals und damit innerhalb der dadurch bestimmten Profilwand verläuft.

Trägt der Düsenkopf einen gegen den Innenkanal in den Verteilerraum vorstehenden Verteilerkegel, so kann damit die Schmelze des Innenkanals in den Verteilerraum besonders gleichmäßig eingeleitet werden. Stagnationszonen auf der der Mündung des Innenkanals gegenüberliegende Seite des Verteilerraums sind somit ausgeschlossen.

Weist der Verteilerraum jeweils einen kleineren Strömungsquerschnitt als der Ring- und der Innenkanal auf, so kann die Strömungsgeschwindigkeit im Verteilerraum gegenüber dem Ring- und dem Innenkanal erhöht werden. Dies ist insbesondere in Zonen des Zusarnmentreffens beider Schmelzströme von Vorteil, da damit Stagnationszonen im Strömungsschatten der beiden aufeinandertreffenden Schmelzströme vermieden werden können. Die Gefahr einer Ausbildung solcher Stagnationszonen entsteht vor allem dort, wo die beiden Schmelzströme aufeinandertreffen und umgelenkt werden, also insbesondere im Umlenkbereich des jeweiligen Extrusionskanals auf der gegenüberliegenden Seite des Verteilerraums.

Werden der Ring- und der Innenkanal mit unterschiedlichen Kunststoffschmelzen beaufschlagt, so eröffnet sich die Möglichkeit, verschiedene Kunststoffschmelzen für ein Hohlprofil zu verwenden. Beispielsweise kann so für den Ringkanal qualitativ hochwertige Kunststoffschmelze und für den Innenkanal minderwertigere Kunststoffschmelze eingesetzt werden. Da die Kunststoffschmelze aus dem Ringkanal zumindest die Außenfläche des zu fertigenden Profilstrangs bildet, kann der Schmelzstrom aus dem Innenkanal nirgends bis an die Außenfläche des Profilstrangs durchdringen, so daß ohne zusätzliche Maßnahmen gewährleistet ist, daß die Außenflächen des Profilstrangs durchgehend aus der Kunststoffschmelze des Ringkanals bestehen.

Sind die Extrusionskanäle des Düsenkopfs mit Abstand innerhalb des Umfangs des Verteilerraums vorgesehen, so kann eine äußerst anpassungsfähige Extrusionsdüse geschaffen werden, denn mit einem Auswechseln des Düsenkopfs sind unterschiedliche Hohlprofile extrudierbar. Im Gegensatz zum Stand der Technik kann das Verteilerstück ohne Rücksicht auf eventuelle konstruktive Anpassungen weiter verwendet werden, was eine vergleichsweise vielfältig einsetzbare Extrusionsdüse schafft.

Ist der Verteilerraum als eine vom Verteilerstück abgedeckte Aussparung des Düsenkopfes ausgebildet, so können die Abmessungen des Verteilerraums mit dem Austauschen des Düsenkopfes verändert werden. Der Verteilerraum ist daher stets über den Düsenkopf an die jeweiligen Anforderungen anpaßbar, was eine Extrusionsdüse mit einem universellen Verteilerstück schafft, an das unterschiedliche Düsenköpfe angesetzt werden können.

### Kurze Beschreibung der Zeichnung

In der Zeichnung ist der Erfindungsgegenstand anhand von zwei Ausführungsformen beispielsweise dargestellt. Es zeigen
- Fig. 1: eine erste Ausführungsform der erfindungsgemäßen Extrusionsdüse in einer teilweise aufgerissenen Seitenansicht,

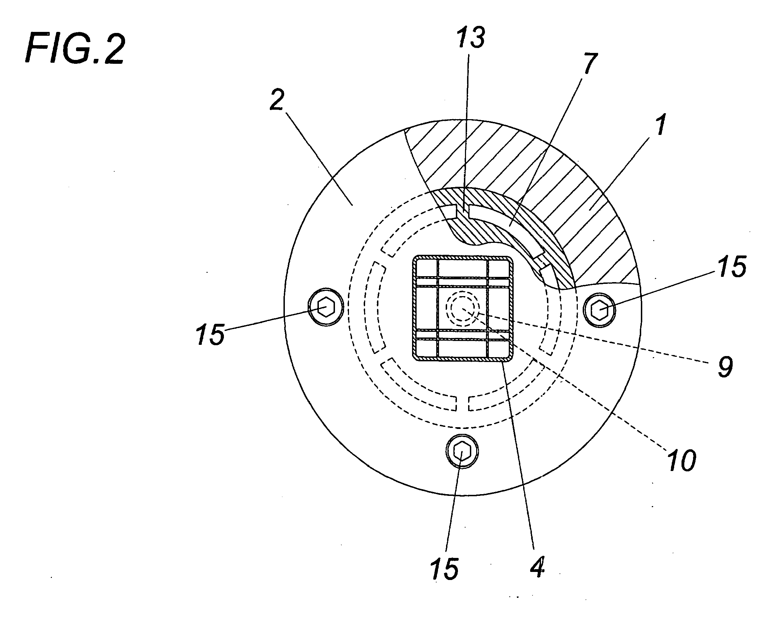

- Fig. 2: eine teilweise aufgerissene Draufsicht auf die Extrusionsdüse nach Fig. 1 und
- Fig. 3: eine weiter Ausführungsform der erfindungsgemäßen Extrusionsdü- se mit einer unterschiedlichen Beschickung des Ring- und des In- nenkanals.

### Weg zur Ausführung der Erfindung

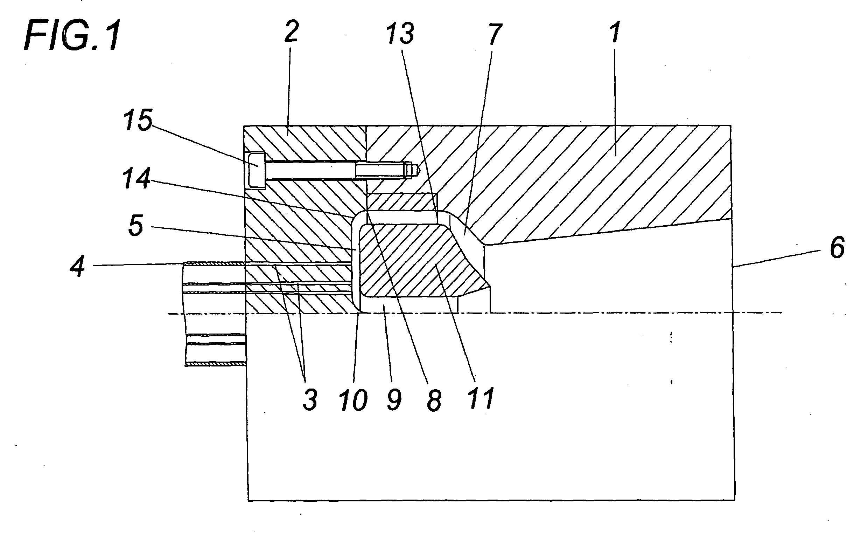

Gemäß der Fig. 1 besteht die beispielsweise dargestellte Extrusionsdüse zum Extrudieren von Hohlprofilen aus einem Verteilerstück 1 und einem Düsenkopf 2. Der Düsenkopf 2 weist Extrusionskanäle 3 zum Formen eines Profilstrangs 4 auf, wobei der Düsenkopf 2 an das Verteilerstück 1 angeschlossen ist und vom Verteilerstück 1 mit Kunststoffschmelze beaufschlagt wird. Zwischen dem Düsenkopf 2 und dem Verteilerstück 1 ist ein Verteilerraum 5 vorgesehen, der quer zu den Extrusionskanälen 3 verläuft und von dem aus die Extrusionskanäle 3 des Düsenkopfes 2 ausgehen. Die dem Verteilerstück 1 über eine Anschlußöffnung 6 zugeführte Kunststoffschmelze wird mit Hilfe eines Ringkanals 7 dem Verteilerraum 5 zugeführt, wobei der Verteilerraum 5 entlang seines Umfangs 8 an den Ringkanal 7 angeschlossen ist. Erfindungsgemäß wird der Verteilerraum 5 zusätzlich von einem Innenkanal 9 mit Kunststoffschmelze beaufschlagt, der innerhalb des Ringkanals 7 in den Verteilerraum 5 mündet. Es entstehen dadurch zwei entgegen gerichtete und voneinander unabhängige Ströme aus Kunststoffschmelze, die gegebenenfalls gemeinsam in einen Extrusionskanal 3 münden. Im Verteilerraum 5 herrscht daher erfindungsgemäß immer eine gewisse Strömungsgeschwindigkeit vor, so daß ein Verweilen von Kunststoffschmelze im Verteilerraum 5 ausgeschlossen werden kann. Stagnationszonen können somit auch nicht entstehen. Die Bereiche, bei denen die beiden Ströme aufeinandertreffen, sowie auch die jeweiligen Strömungsgeschwindigkeiten ergeben sich zwar in Abhängigkeit des gesamten Düsensystems, also nicht nur aufgrund der betreffenden Eigenschaften der Extrusionsdüse, doch können sich aufgrund der Mindestströmungsgeschwindigkeit im gesamten Verteilerraum 5 keine Stagnationszonen einstellen.

Werden im Betrieb der Extrusionsdüse Zonen mit vergleichsweise niedrigen Strömungsgeschwindigkeiten festgestellt, so kann im Ringkanal 7 bzw. im Innenkanal 9 der jeweilige Fließwiderstand verändert werden, um die Strömungsgeschwindigkeiten im Verteilerraum durch eine Änderung der Schmelzflußaufteilung auf den Ringkanal 7 und den Innenkanal 9 an die jeweiligen Bedingungen vorteilhaft anzupassen. Sinnvolle Maßnahmen hierbei sind beispielsweise eine Änderung des Durchmessers des Innenkanals 9, eine Änderung der Spaltweite des Ringkanals 7 oder auch eine Änderung der Spaltweite des Verteilerraumes 5. Damit können Einstellungen getroffen werden, die unzulässig niedrige Strömungsgeschwindigkeiten im Verteilerraum 5 vermeiden, ohne aber damit die Extrusionsgeschwindigkeit des Profilstrangs 4 wesentlich zu verändern.

Der Düsenkopf 2 trägt einen gegen den Innenkanal 9 in den Verteilerraum 5 vorstehenden Verteilerkegel 10, was die durch den Innenkanal 9 fließende Kunststoffschmelze vorteilhaft auf den Verteilerraum 5 aufteilt. Außerdem wird dadurch das Fließverhalten der Kunststoffschmelze so wenig wie möglich beeinträchtigt.

Der Verteilerraum 5 weist einen jeweils kleineren Strömungsquerschnitt als der Ringkanal 7 und der Innenkanal 9 auf, so daß mit hohen Strömungsgeschwindigkeiten im Verteilerkanal 5 zu rechnen ist. Die Gefahr an eventuellen Stagnationszonen kann damit noch weiter reduziert werden.

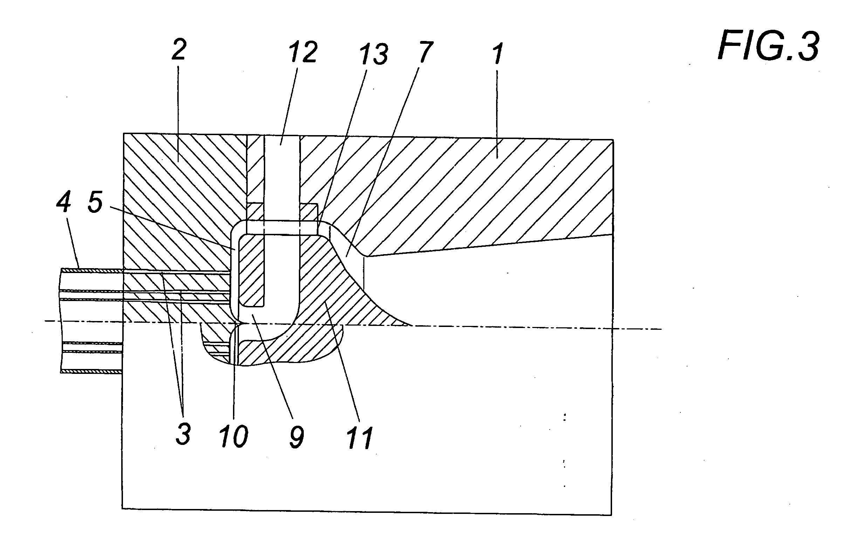

Gemäß Fig. 1 wird der Innenkanal 9 und der Ringkanal 7 über eine gemeinsame Anschlußöffnung 6 mit Kunststoffschmelze beschickt, wobei zur Ausbildung der beiden Kanäle 7 und 9 das Verteilerstück 1 einen Verdrängungskörper in der Form eines Torpedos 11 aufweist. Um nun einen Profilstrang 4 mit verschiedenen Kunststoffschmelzen beschicken zu können, weist der Innenkanal 9 einen eigenen Anschluß 12 auf, was insbesondere der Fig. 3 zu entnehmen ist. Der Innenkanal 9 besitzt so eine getrennte Beschickungsmöglichkeit, so daß der innere Teil des Profilstrangs 4 beispielsweise mit Schmelze aus recyceltem Kunststoff beschickt werden kann. Der Einsatz von recyceltern Kunststoff muß zwar nicht zwangsweise zu einem Qualitätsverlust führen, jedoch hat recycelter Kunststoff meist den Nachteil von optischen Verfärbungen. Gemäß der Erfindung wird sichergestellt, daß die Außenseite des Profilstrangs 4 mit frischer Schmelze beschickt werden kann, so daß Verfärbungen im Inneren des Profilstrangs 4 zumindest von außen nicht einsehbar sind. Um dem Innenkanal 9 Kunststoffschmelze zuführen zu können, ist der Innenkanal 9 mit dem Anschluß 12 durch eine der Speichen 13 des Torpedos 11 hindurch verbunden.

Weiters ist auch vorstellbar, was nicht näher dargestellt ist, den Innenkanal 9 durch einen axial liegenden ersten Extruder und den Ringkanal 7 durch einen dazu radial außen liegenden, zweiten Extruder zu beaufschlagen, wobei der Torpedo 11 so umflossen wird, wie dies bei einem sogenannten "Pinolenkopf" beim Blasformen bekannt ist. Diese ist insbesondere dann zweckmäßig, wenn der Profilstrang 4 mehrheitlich aus Recyclingmaterial bestehen soll, so daß die Hauptmenge der Kunststoffschmelze durch den Innenkanal 9 fließen muß.

Die Extrusionskanäle 3 sind innerhalb des Umfangs 8 des Verteilerraums 5 vorgesehen, so daß mit einem Austauschen des Düsenkopfs 2 keine konstruktiven Änderungen am Ringkanal 7 bzw. am Innenkanat 9 des Verteilerstücks 1 vorgenommen werden müssen. Die Einleitung der Kunststoffschmelze durch das Verteilerstück 1 in den Verteilerraum 5 kann daher beibehalten werden.

Der Verteilerraum 5 ist als eine vom Verteilerstück 1 abgedeckte Aussparung 14 des Düsenkopfs 2 ausgebildet, so daß zur Beschickung des Düsenkopfs 1 der maximale Durchmesser des Ringkanals 7 verwendet werden kann. Damit ist eine vielseitig einsetzbare Extrusionsdüse geschaffen, die ein Austauschen des Düsenkopfes 2 über die Befestigungsschrauben 15 erlaubt, ohne auf die konstruktive Ausgestaltung des Vertellerstücks 1 Rücksicht nehmen zu müssen. Außerdem kann damit, um niedrige Strömungsgeschwindigkeit im Verteilerraum 5 zu vermeiden, der Strömungswiderstand des Verteilerraums 5 durch ein Ändern der Abmessungen der Aussparung 14 des Düsenkopfs 2, der ja austauschbar ist, angepaßt werden.

## Patentansprüche

1. Extrusionsdüse zum Extrudieren von Hohlprofilen mit einem an ein Verteilerstück (1) angeschlossenen, Extrusionskanäle (3) zur Formung eines Profilstrangs (4) bildenden Düsenkopf (2) und mit einem zwischen dem Düsenkopf (2) und dem Verteilerstück (1) vorgesehenen, quer zu den Extrusionskanälen (3) verlaufenden Verteilerraum (5), der entlang seines Umfanges (8) an einen Ringkanal (7) zur Beaufschlagung mit Kunststoffschmelze angeschlossen ist und von dem die Extrusionskanäle (3) des Düsenkopfes (2) ausgehen, **gekennzeichnet, daß** das Verteilerstück (1) einen innerhalb des Ringkanals (7) in den Verteilerraum (5) derart mündenden Innenkanal (9) zur zusätzlichen Beaufschlagung des Verteilerraums (5) mit Kunststoffschmelze aufweist, daß die entgegengesetzten Ströme aus Kunststoffschmelze des Ringkanals (7) und des Innenkanals (9) zumindest im Bereich eines Extrusionskanals (3) aufeinandertreffen und über diesen Extrusionskanal (3) abfließen, um damit Stagnationszonen im Verteilerraum (5) zu vermeiden.

2. Extrusionsdüse nach Anspruch 1, **dadurch gekennzeichnet, daß** der Düsenkopf (2) einen gegen den Innenkanal (9) in den Verteilerraum (5) vorstehenden Verteilerkegel (10) trägt.

3. Extrusionsdüse nach Anspruch 1 oder 2, **dadurch gekennzeichnet, daß** der Verteilerraum (5) jeweils einen kleineren Strömungsquerschnitt als der Ringkanal (7) und der Innenkanal (9) aufweist.

4. Extrusionsdüse nach einem der Ansprüche 1 bis 3, **dadurch gekennzeichnet, daß** der Ringkanal (7) und der Innenkanal (9) mit unterschiedlichen Kunststoffschmelzen beaufschlagbar sind.

5. Extrusionsdüse nach Ansprüche 1 bis 4, **dadurch gekennzeichnet, daß** die Extrusionskanäle (3) des Düsenkopfes (2) mit Abstand innerhalb des Umfangs (8) des Verteilerraums (5) vorgesehen sind.

6. Extrusionsdüse nach einem der Ansprüche 1 bis 5, **dadurch gekennzeichnet, daß** der Verteilerraum (5) als eine vom Verteilerstück (1) abgedeckte Aussparung (14) des Düsenkopfes (2) ausgebildet ist.

## Claims

1. Extrusion die for extruding hollow profiles having a die head (2) which is connected to a distributor piece (1) and forms extrusion channels (3) for shaping a profiled strand (4), and having a distributor chamber (5) which is provided between the die head (2) and the distributor piece (1), extends transversely to the extrusion channels (3) and is connected along its periphery (8) to an annular channel (7) for impingement with plastic melt, and from which the extrusion channels (3) of the die head (2) originate, **characterised in that** the distributor piece (1) comprises an inner channel (9) for additionally impinging the distributor chamber (5) with plastic melt, which inner channel opens within the annular channel (7) into the distributor chamber (5) such that the oppositely-directed flows of plastic melt from the annular channel (7) and the inner channel (9) meet each other at least in the region of an extrusion channel (3) and flow off via this extrusion channel (3) in order to thus prevent stagnation zones in the distributor chamber (5).

2. Extrusion die as claimed in Claim 1, **characterised in that** the die head (2) supports a distributor cone (10) which protrudes into the distributor chamber (5) towards the inner channel (9).

3. Extrusion die as claimed in Claim 1 or 2, **characterised in that** the distributor chamber (5) has a smaller flow cross-section than the annular channel (7) and the inner channel (9).

4. Extrusion die as claimed in any one of Claims 1 to 3, **characterised in that** the annular channel (7) and the inner channel (9) can be impinged with different plastic melts.

5. Extrusion die as claimed in Claims 1 to 4, **characterised in that** the extrusion channels (3) of the die head (2) are provided with a spaced disposition within the periphery (8) of the distributor chamber (5).

6. Extrusion die as claimed in any one of Claims 1 to 5, **characterised in that** the distributor chamber (5) is formed as a cavity (14) in the die head (2) covered by the distributor piece (1).

## Revendications

1. Filière d'extrusion, pour l'extrusion de profilés creux, avec une tête de filière (2) raccordée à une pièce de distributeur (1), formant des canaux d'extrusion (3) pour former un boudin de profilé (4), et avec une chambre de distributeur (5), prévue entre la tête de filière (2) et la pièce de distributeur (1), s'étendant transversalement aux canaux d'extrusion (3), la chambre de distributeur (5) étant raccordée, le long de sa périphérie (8), à un canal annulaire (7) pour l'alimentation avec une masse fondue de matière synthétique, et les canaux d'extrusion (3) de la tête de filière (2) partant de la chambre de distributeur (5), **caractérisée en ce que** la pièce de distributeur (1) présente un canal intérieur (9) débouchant, à l'intérieur du canal annulaire (7), dans la chambre de distributeur (5) de manière à assurer une alimentation supplémentaire de la chambre de distributeur (5) avec une masse fondue de matière synthétique, **en ce que** les écoulements, se faisant en sens opposé, provenant de la masse fondue de matière synthétique du canal annulaire (7) et du canal intérieur (9), se rejoignent au moins dans la zone d'un canal d'extrusion (3) et s'évacuent par ce canal d'extrusion (3), pour éviter ainsi que des zones de stagnation se créent dans la chambre de distributeur (5).

2. Filière d'extrusion selon la revendication 1, **caractérisée en ce que** la tête de filière (2) porte un cône de distributeur (10) faisant saillie dans la chambre de distributeur (5), vers le canal intérieur (9).

3. Filière d'extrusion selon la revendication 1 ou 2, **caractérisée en ce que** la chambre de distributeur (5) présente une section transversale offerte à l'écoulement respectivement plus petite que le canal annulaire (7) et le canal intérieur (9).

4. Filière d'extrusion selon l'une des revendications 1 à 3, **caractérisée en ce que** le canal annulaire (7) et le canal intérieur (9) sont susceptibles d'être alimentés par des masses en fusion de matière synthétique différentes.

5. Filière d'extrusion selon l'une des revendications 1 à 4, **caractérisée en ce que** les canaux d'extrusion (3) de la tête de filière (2) sont prévus à une certaine distance à l'intérieur de la périphérie (8) de la chambre de distributeur (5).

6. Filière d'extrusion selon l'une des revendications 1 à 5, **caractérisée en ce que** la chambre de distributeur (5) est réalisée sous la forme d'un évidement (14), couvert par la pièce de distributeur (1), de la tête de filière (2).
